Europäisches Patentamt

(19) European Patent Office

Office européen des brevets

(11) Publication number: **0 252 698 B1**

# (12) EUROPEAN PATENT SPECIFICATION

(45) Date of publication of patent specification: 26.06.91   (51) Int. Cl.⁵: **C22B 1/248, C22B 19/02,**
**C22B 19/30, C22B 1/24**

(21) Application number: 87305927.3

(22) Date of filing: 03.07.87

(54) Process for agglomeration of oxidic and metallic solids.

(30) Priority: 05.07.86 GB 8616453

(43) Date of publication of application:
**13.01.88 Bulletin 88/02**

(45) Publication of the grant of the patent:
**26.06.91 Bulletin 91/26**

(84) Designated Contracting States:
**AT BE CH DE ES FR GB GR IT LI LU NL SE**

(56) References cited:
**DE-A- 1 533 146          FR-A- 489 544**
**GB-A- 160 455           GB-A- 1 422 232**
**GB-A- 2 046 109         GB-A- 2 072 641**
**US-A- 1 415 094         US-A- 3 316 083**
**US-A- 3 774 289         US-A- 3 850 613**

**MEYER K.: "Pelletizing of Iron Ores", 1980,**
**Springer-Verlag (Berlin-Heidelberg-New**
**York)**

(73) Proprietor: **Imperial Smelting Processes**
**Limited**
**1 Redcliff Street**
**Bristol(GB)**

(72) Inventor: **Kruger, Albert**
**12, Melville Road**
**Redland Bristol(GB)**

(74) Representative: **Whalley, Kevin et al**
**MARKS & CLERK 57/60 Lincoln's Inn Fields**
**London WC2A 3LS(GB)**

## Description

This invention relates to a process for agglomeration of oxidic and metallic solids, and especially to the production of agglomerates from secondary metallic and oxidic materials, suitable for feeding to a zinc/lead blast furnace or other pyro-metallurgical zinc reduction process, in order to recover metal values therefrom.

There is considerable economic value in augmenting metal reduction process feedstocks with as much secondary material as possible. In the case of zinc/lead blast furnaces there is benefit in feeding secondary metal oxides and chlorides as agglomerates which have good cold strength and which will not break down under the high-temperature conditions within the furnace before actual chemical reduction commences.

Previous agglomeration processes for zinc/lead blast furnaces have usually relied upon high pressures and/or high temperatures to form a metal oxide agglomerate without a specific binder addition.

Amongst these previous proposals for oxidic zinc materials reference is made to U.K. Patent nos. 1,302,864 and 1,394,609. However these processes are essentially high pressure (1-20 tons/sq. inch) and high temperature (500°-800° C.) processes.

These processes are expensive on wear of mechanical equipment and fuel for preheating.

There is still a need for a low temperature (and hence low cost) process which will result in an agglomerate having good "green strength" as formed and which will, on maturing, form a briquette or pellet which is physically strong and resistant to furnace heat until chemical reduction takes place within a smelting furnace. Existing techniques known in the art rely on cold binders such as organics (starch, molasses), petro-derivatives (bitumen, pitch), inorganics (sodium silicate) and the like. All have disadvantages with hot strength and some with other disadvantageous features such as volatiles distillation.

We have now devised a process which allows agglomerates to be formed from oxidic and metallic secondary materials at low temperatures in briquette or pellet form to provide materials suitable for feeding to a zinc reduction process.

Attention is also drawn to the disclosures of GB-A-0160455, and of Pelletizing of Iron Ores, Kurt Meyer 1980, Springer Verlag, Berlin, Heidelberg, New York, pages 3 to 6 and 116 to 120.

The present invention provides a process for low-temperature agglomeration of oxidic material predominantly composed of zinc oxide and/or zinc oxychloride and/or zinc carbonate, and of metallic solids of zinc metal or aluminium metal, in powder or dust form, or alloys or mixtures of said metals; comprising mixing the solids together with water and a fine-particle-size solid void-filler, and then submitting the mixture to pelletization or briquetting at a temperature from 10° to 50° C, and then curing the agglomerates to allow strength to develop, by exothermic chemical reaction, and free moisture content to decrease.

The oxidic material is predominately composed of particulate zinc oxide, zinc oxychloride and/or zinc carbonate. Maximum size should preferably be less than 3 mm.

The metallic material is zinc powder or dust or aluminium powder or dust; or physical or alloy mixes of these.

Preferably the filler is quick-lime (CaO), or slaked lime (Ca(OH)$_2$). Alternatively soda ash or fine silica may be used. These should be finely divided. These fillers improve strength by reducing porosity. A chemical setting action is present with quick lime and slaked lime which suppresses arsine (AsH$_3$) and zinc chloride volatilization.

Preferably water forms from 3 to 20% by weight of the mixture being agglomerated; the low end of the range being typical of briquetting and the high end typical of pelletizing. The water may be incorporated in an aqueous "green strength" binder such as sulphite lye or aqueous sodium silicate, that is the water is introduced in the form of the aqueous salt solution so as to increase the green strength of the agglomerate.

The metallic material preferably forms from 5 to 50% by weight of the mixture; more preferably 5 to 25% by weight.

The particulate filler preferably constitutes from 2% to 10% by weight of the mixture.

The temperature during agglomeration is slightly above ambient, that is in the range of 10° - 50° C.

The invention will be further described with reference to the following illustrative examples of compositions obtained according to the invention with appended temperature, moisture content and mechanical strength figures. In these examples the tables are as follows:

Table 1 relates to pelletized compositions.

Table 2 relates to ram-pressed briquettes.

Table 3 relates to roll-pressed briquettes.

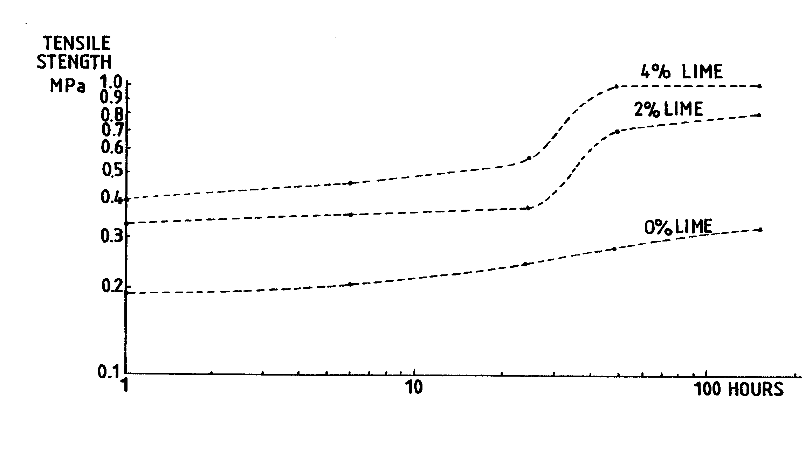

Reference will also be made to the accompanying drawing, which is a graph of tensile strength against time in respect of ram-pressed briquettes made from pump sump dross with 15% zinc dust. The graph shows variation of tensile strength with lime content and time after mixing and pressing.

The experimental details relevant to Table 1 were as follows:

Mixes of zinc blast furnace pump sump dross (Pb + ZnO + Pbo), galvanisers ashes (Zn + Fe + Zno + ZnCl$_2$), oversize zinc dust and hydrated lime were pelletized on discs with dilute sulphite lye solution as "green strength" binder. The sulphite lye is not essential. Pellets up to 25mm diameter were produced in quantities up to several kg from mixes which had been screened -3mm. There were a number of time dependent effects.

Over several hours the temperature of the pellets slowly rose and fell. Over several days their moisture content steadily fell from about 11% to less than 5% and their strength increased to high levels. The strength of the pellets was assessed by pressing the pellets between two parallel plates and measuring the average load to cause fracture. On a qualitative basis it was observed that stronger pellets were obtained by slowing up the drying process. The pellets remained strong after several weeks exposure out-of-doors during wet, cold winter conditions.

The experimental details relevant to Table 2 and the accompanying drawing were as follows:

Mixes of zinc blast furnace pump sump dross (Pb + ZnO + PbO), mixed zinc oxides (Zn + ZnO), oversize zinc dust, hydrated lime and water were pressed in a 40mm diameter die under a load of 7 tonnes. The strength of the ram pressed briquettes was assessed by pressing them along a diameter between two parallel plates to fracture. The load can be used to calculate the tensile strength from the formula:

$$\textbf{Tensile strength} = \frac{\textbf{2 x Failure Load}}{\textbf{Pi x diameter x thickness}}$$

If load is measured in kg and dimensions in millimetres, then the result can be expressed in MPa by multiplying by 9.807.

Temperature, moisture and strength changes similar to those of the pellets were noted. The strength of the briquettes improved with increasing metallic zinc content and increasing lime content. However the contributions of each component tended to diminish as their proportions were increased. The drawing shows the increase in strength due to the lime filler immediately after pressing, the gradual increase of strength with time due to the metallic component and the further time dependent increase in strength due to reaction of the lime.

The experimental details relevant to Table 3 were as follows:

Table 3 gives details of trials with a briquetting pilot plant, a Komarek-Greaves roll press making 45 x 41 x 20mm pillow-shaped briquettes. Approximately 50 kg charges were fed through the press within a few minutes of mixing in a paddle mixer. Temperature, moisture and strength changes similar to those of the pellets and the ram-pressed briquettes were noted. Strengths comparable with the products of other cold briquetting processes were achieved.

The strength of the briquettes was assessed by pressing the briquettes along their smallest axis between two parallel plates and measuring the average load to cause fracture.

The presence of green strength binders such as the previously mentioned sulphite lye (a ligno-sulphonate) are not considered essential but are not excluded from the composition. Green binders in conjunction with metallic binder may give an improved immediate strength. This could be valuable in situations where handling stresses directly after agglomeration are high. Examples of green strength binders which may be useful in this respect have already been given.

Pelletized materials

TABLE 1

BLEND COMPOSITION | WT % (db) | OBSERVATION
T(emperature) °C
M(oisture) wt %
S(trength) kg to failure

TIME h(ours) d(ays)

| BLEND COMPOSITION | WT % (db) | | 0 | 1h | 5h | 1d | 2d | 4d | 7d |
|---|---|---|---|---|---|---|---|---|---|
| Pump sump dross -3mm | 60 | T | 15 | | | 41 | | | |
| Galvanizers zinc ash -3mm | 26 | | | | | | | | |
| Zinc dust -3+0.125mm | 8 | | | | | | | | |
| Lime | 6 | | | | | | | | |
| Sulphite lye 25% solution | | | | | | | | | |
| Pump sump dross | 40 | T | 15 | | 28 | 22 | | | |
| Zinc ash | 40 | M | | 11 | 9 | | | 5 | |
| Zinc oxide -3mm | 10 | S | | | | 32 | | 53 | 62 |
| Zinc dust | 5 | | | | | | | | |
| Lime | 5 | | | | | | | | |
| Sulphite lye 10% solution | | | | | | | | | |
| Pump sump dross | 44 | T | | | | | | | |
| Zinc ash | 33 | M | | 11 | | | 7 | 6 | |
| Zinc oxide | 11 | S | | | | 24 | 34 | 55 | |
| Zic dust | 6 | | | | | | | | |
| Lime | 6 | | | | | | | | |
| Sulphite lye 10% solution | | | | | | | | | |

Ram press briquettes                                    TABLE 2

| BLEND COMPOSITION | WT % (db) | OBSERVATION M(oisture) wt% S(trength) MPa | |
|---|---|---|---|
| | | TIME  h(ours) d(ays) | |
| | | 0 | 7d |
| Pump sump dross | 85 | M  5 | |
| Zinc powder | 10 | S | 1.97 |
| Lime | 5 | | |
| Pump sump dross | 65 | M  5 | |
| Zinc oxides | 30 | S | 1.37 |
| (including metallics) | | | |
| Lime | 5 | | |
| Pump sump dross | 55 | M  5 | |
| Zinc oxides | 30 | S | 1.95 |
| Zinc powder | 10 | | |
| Lime | 5 | | |
| Pump sump dross | 50 | M  5 | |
| Zinc oxides | 30 | S | 1.95 |
| Zinc powder | 10 | | |
| Lime | 10 | | |

Roll press briquetting
Conditions: 50kg charges at scroll speed 70 rpm, 14MPa hydraulic pressure

TABLE 3

| BLEND COMPOSITION | WT % (db) | OBSERVATION M(oisture) wt % S(trength) kg to failure | | | | | | |
|---|---|---|---|---|---|---|---|---|
| | | TIME h(ours) d(ays) | | | | | | |
| | | 0 | 1h | 2h | 5h | 1 d | 2 d | 4 d |
| Pump sump dross | 67 | S 46 | | | | | | |
| Galvanizers zinc ash | 18 | M 3 | | | | | | |
| Returns | 9 | | | | | | | |
| Lime | 3 | | | | | | | |
| Sodium silicate | 3 | | | | | | | |
| Pump sump dross | 67 | S 39 | | | | 129 | | |
| Galvanizers zinc ash | 18 | M 3 | | | | | | |
| Returns | 9 | | | | | | | |
| Lime | 3 | | | | | | | |
| Sodium silicate | 3 | | | | | | | |
| Pump sump dross | 62 | S 39 | | | | | | |
| Galvanizers zinc ash | 16 | M 3 | | | | | | |
| Returns | 16 | | | | | | | |
| Lime | 3 | | | | | | | |
| Sulphite lye | 2 | | | | | | | |
| Pump sump dross | 62 | S 35 | | | | 196 | | |
| Galvanizers zinc ash | 16 | M 4 | | | | | | |
| Returns | 16 | | | | | | | |
| Lime | 3 | | | | | | | |
| Sodium silicate | 2 | | | | | | | |
| Pump sump dross | 62 | S 35 | 49 | 78 | | | 168 | |
| Galvanizers zinc ash | 16 | M 4 | | | | | | |
| Returns | 16 | | | | | | | |
| Lime | 3 | | | | | | | |
| Sodium silicate | 2 | | | | | | | |
| Pump sump dross | 63 | S 21 | | | 70 | 179 | 210 | 224 |
| Returns | 19 | M 7 | | | | 5 | | 4 |
| Zinc powder | 7 | | | | | | | |
| Lime | 4 | | | | | | | |
| Sulphite lye | 7 | | | | | | | |
| Pump sump dross | 56 | S 20 | | | 73 | 182 | 190 | 153 |
| Zinc ash fines | 7 | M 7 | | | | 5 | 5 | 4 |
| Zinc ash coarse | 7 | | | | | | | |
| Returns | 17 | | | | | | | |
| Zinc powder | 3 | | | | | | | |
| Lime | 3 | | | | | | | |
| Sulphite lye | 7 | | | | | | | |

```
Roll press briquetting                              TABLE 3 CONTINUED
Conditions: 50kg charges at scroll speed 70 rpm, 14MPa hydraulic
                                                                 pressure
```

BLEND COMPOSITION — WT % (db) — OBSERVATION

M(oisture) wt %
S(trength) kg to failure

| BLEND COMPOSITION | WT % (db) | Obs | 0 | 1h | 2h | 5h | 1d | 2d | 4d |
|---|---|---|---|---|---|---|---|---|---|
| Pump sump dross | 44 | S | 17 | | | | 63 | 102 | 126 |
| Galvanizers zinc ash | 26 | M | 6 | | | | 5 | 5 | 4 |
| Zinc oxide | 3 | | | | | | | | |
| Returns | 15 | | | | | | | | |
| Zinc powder | 3 | | | | | | | | |
| Lime | 3 | | | | | | | | |
| Sulphite lye | 6 | | | | | | | | |
| **************** | | | | | | | | | |
| Pump sump dross | 44 | S | 28 | | | | 85 | 113 | 137 |
| Galvanizers zinc ash | 27 | M | 5 | | | | 4 | 4 | 4 |
| Zinc oxide | 3 | | | | | | | | |
| Returns | 15 | | | | | | | | |
| Zinc powder | 3 | | | | | | | | |
| Lime | 3 | | | | | | | | |
| Sulphite lye | 5 | | | | | | | | |
| **************** | | | | | | | | | |
| Pump sump dross | 56 | S | 29 | | 56 | | 95 | | 140 |
| Galvanizers zinc ash | 15 | | | | | | | | |
| Zinc oxide | 3 | | | | | | | | |
| Returns | 15 | | | | | | | | |
| Zinc powder | 3 | | | | | | | | |
| Lime | 3 | | | | | | | | |
| Sulphite lye | 5 | | | | | | | | |
| **************** | | | | | | | | | |
| Pump Sump Dross | 85 | S | 69 | | 154 | | | | 257 |
| Zinc Powder | 10 | M | 4 | | | | | | |
| Lime | 5 | | | | | | | | |

## Claims

1. A process for low-temperature agglomeration of oxidic material predominantly composed of zinc oxide and/or zinc oxychloride and/or zinc carbonate, and of metallic solids of zinc metal or aluminium metal, in powder or dust form, or alloys or mixtures of said metals; comprising mixing the solids, together with water and a small-particle-size void-filler; submitting the mixture to pelletization or to briquetting at a temperature from 10° to 50°C; and curing the agglomerates to allow strength to develop and free moisture content to decrease.

2. A process as claimed in claim 1, characterised in that the filler is quick-lime, slaked lime, soda ash or fine silica.

3. A process as claimed in claim 1 or 2, characterised in that water forms from 3 to 20% by weight of the mixture.

4. A process as claimed in claim 3, characterised in that the water is introduced in the form of an aqueous salt solution, for example as sulphite lye or aqueous sodium silicate, so as to increase the "green strength" of the agglomerate.

5. A process as claimed in any of claims 1 to 4, characterised in that the metallic material forms from 5 to 50% by weight of the mixture.

6. A process as claimed in any of claims 1 to 5, characterised in that the filler constitutes from 2% to 10% by weight of the mixture.

7. Pellets or briquettes produced by a process as claimed in any preceding claim.

## Revendications

1. Procédé d'agglomération à basse température de matériau oxydé composé principalement d'oxyde de zinc et/ou d'oxychlorure de zinc et/ou de carbonate de zinc, et de solides métalliques de zinc ou d'aluminium, sous forme de poudre ou de poussière, ou d'alliages ou de mélanges desdits métaux ; comportant le mélange des matières solides, conjointement avec de l'eau et une charge à faible dimension de particule ; la soumission du mélange à la formation de boulettes ou de briquettes à une température comprise entre 10° et 50° C ; et la cuisson des agglomérés pour permettre à la résistance de se développer et à la teneur en humidité libre de décroître.

2. Procédé selon la revendication 1, caractérisé en ce que la charge est de la chaux vive, de la chaux éteinte, des cendres de soude ou de la silice fine.

3. Procédé selon la revendication 1 ou 2, caractérisé en ce que l'eau constitue de 3 à 20% du mélange.

4. Procédé selon la revendication 3, caractérisé en ce que l'eau est introduite sous la forme d'une solution aqueuse de sel, par exemple sous la forme de lessive de sulfite ou de silicate de sodium aqueux, de manière à augmenter la " résistance crue" de l'aggloméré.

5. Procédé selon l'une quelconque des revendications 1 à 4, caractérisé en ce que le matériau métallique constitue de 5 à 50% en poids du mélange.

6. Procédé selon l'une quelconque des revendications 1 à 5, caractérisé en ce que la charge constitue de 2 à 10% en poids du mélange.

7. Boulettes ou briquettes fabriquées selon un procédé tel que revendiqué dans l'une quelconque des revendications précédentes.

## Ansprüche

1. verfahren zur Niedrigtemperaturagglomeration von oxidischem Material, das hauptsächlich aus Zinkoxid und/oder Zinkoxychlorid und/oder Zinkcarbonat und aus metallischen Feststoffen von Zinkmetall oder Aluminiummetall, in Pulver- oder Staubform, oder Legierungen oder Lösungen dieser Metalle zusammengesetzt ist, bei dem die Feststoffe zusammen mit Wasser und einem Hohlraumfüllmittel mit geringer Teilchengröße gemischt werden, die Mischung einer Pelletisierung oder einer Brikettierung bei einer Temperatur von 10 bis 50° C ausgesetzt wird und die Agglomerate gehärtet werden, damit sich Festigkeit entwickeln kann und der freie Feuchtigkeitsgehalt abnimmt.

2. verfahren nach Anspruch 1, **dadurch gekennzeichnet**, daß das Füllmittel Schnellkalk, Löschkalk, wasserfreies Soda oder feines Siliciumoxid ist.

3. Verfahren nach Anspruch 1 oder 2, **dadurch gekennzeichnet**, daß das Wasser 3 bis 20 Gew.-% der Mischung bildet.

4. Verfahren nach Anspruch 3, **dadurch gekennzeichnet**, daß das Wasser in Form einer wäßrigen Salzlösung, beispielsweise als Sulphitlauge oder wäßriges Natriumsilikat, eingeführt wird, um die "Grünfestigkeit" des Agglomerats zu erhöhen.

5. Verfahren nach einem der Ansprüche 1 bis 4, **dadurch gekennzeichnet**, daß das metallische Material 5 bis 50 Gew.-% der Mischung bildet.

6. Verfahren nach einem der Ansprüche 1 bis 5, **dadurch gekennzeichnet**, daß das Füllmittel 2 bis 10 Gew.-% der Mischung ausmacht.

7. Pellets oder Briketts, hergestellt durch ein Verfahren nach einem der vorhergehenden Ansprüche.

TENSILE STENGTH MPa

4% LIME

2% LIME

0% LIME

1    10    100 HOURS

EP 0 252 698 B1